# EUROPÄISCHE PATENTSCHRIFT

(11) **EP 1 295 887 B1**
(45) Veröffentlichungstag und Bekanntmachung des Hinweises auf die Patenterteilung: **02.08.2006**
(21) Anmeldenummer: 02020132.3
(22) Anmeldetag: 09.09.2002
(51) Int. Cl.: C07F 1/02

(54) **Verfahren zur Herstellung von reinen Aryllithiumverbindungen**
Preparation of pure aryl lithium compounds
Préparation de composés aryllithium purs

(30) Priorität: 19.09.2001 DE 10146233
(43) Veröffentlichungstag der Anmeldung: 26.03.2003
(73) Patentinhaber: Chemetall GmbH, 60487 Frankfurt am Main (DE)
(72) Erfinder: Emmel, Ute, 65929 Frankfurt am Main (DE); Weiss, Wilfried, Dr., 37632 Eschershausen (DE); Wietelmann, Ulrich, Dr., 61381 Friedrichsdorf (DE); Dawidowski, Dirk, 560439 Frankfurt (DE)
(74) Vertreter: Uppena, Franz

(56) Entgegenhaltungen:
- ARNAULD T ET AL: "ROMPgel-supported biphenyl and naphthalene: reagents for lithiation reactions with minimal purification" TETRAHEDRON LETTERS, ELSEVIER SCIENCE PUBLISHERS, AMSTERDAM, NL, Bd. 43, Nr. 6, 4. Februar 2002 (2002-02-04), Seiten 1081-1083, XP004333965 ISSN: 0040-4039
- GUIJARRO D ET AL: "Arene-Catalysed Lithiation of Fluoroarenes" TETRAHEDRON, ELSEVIER SCIENCE PUBLISHERS, AMSTERDAM, NL, Bd. 56, Nr. 8, Februar 2000 (2000-02), Seiten 1135-1138, XP004189728 ISSN: 0040-4020
- RAMÓN D J ET AL: "New methodologies based on arene-catalysed lithiation reactions and their application to synthetic organic chemistry" EUROPEAN JOURNAL OF ORGANIC CHEMISTRY, 2000, Seiten 225-237, XP002219320 ISSN: 1434-193X
- ALBERT GUIJARRO: "Naphthalene-Catalised Lithiation of Functionalized Chloroarenes: Regioselective Preparation and Reactivity of Functionalised Lithioarenes" TETRAHEDRON, ELSEVIER SCIENCE PUBLISHERS, AMSTERDAM, NL, Bd. 49, Nr. 2, 1993, Seiten 469-482, XP002148659 ISSN: 0040-4020

## Beschreibung

Die Erfindung betrifft ein Verfahren zur Herstellung von reinen Aryllithiumverbindungen und deren Verwendung.

Die Herstellung von Aryllithiumverbindungen in organischen Lösungsmitteln durch Umsetzung von Arylhalogeniden mit Lithiummetall ist seit langer Zeit bekannt. Da Aryllithiumverbindungen in Kohlenwasserstoffen in der Regel unlöslich sind, werden als organische Lösungsmittel etherische Lösungsmittel, beispielsweise Diethylether, bevorzugt. Lösungen von Aryllithiumverbindungen in reinem Diethylether sind jedoch in der Regel nicht ausreichend lagerstabil. Deshalb wurden Lösungen von Aryllithiumverbindungen in etherhaltigen Lösungsmitteln mit einem begrenztem Ethergehalt entwickelt. In diesen Lösungen zersetzen sich Aryllithiumverbindungen langsamer. So beschreiben die US 3,197,516 und die US 3,446,860 Lösungen von Phenyllithium in Diethylether/Kohlenwasserstoffgemischen. Solche Lösungen haben den Nachteil, dass sie hinsichtlich ihrer Thermostabilität nur mäßig verbessert sind und dass sie gekühlt (0 bis 5 °C) gelagert werden müssen. Auch bei diesen Temperaturen ist bei längerer Lagerung eine Verfärbung zu beobachten, und häufig fallen Phenyllithium/Etherkomplexe in kristalliner Form aus.

Bessere, d.h. stabilere Produkte können durch Verwendung höherer Ether erhalten werden. So beschreibt die WO 92/19622 ein Verfahren zur Herstellung von Lösungen von Aryllithiumverbindungen in etherischen Lösungsmitteln ROR' mit R, R' = unabhängig voneinander Alkylradikale mit 3 bis 8 C-Atomen. Unter Verwendung von Dibutylether werden beispielsweise 5 bis 25 %-ige Phenyllithiumlösungen erhalten, die bei 40 °C drei Wochen lang stabil sind. Von Nachteil dieses Verfahrens sind jedoch nichtreproduzierbare Ausbeuten und eine schlechte Reinheit der resultierenden Produkte. Zwar wird in der WO 92/19622 ein Beispiel mit einer sehr hohen Ausbeute (96 %) und extrem hohen Produktreinheit (> 99 %) beschrieben, jedoch konnten diese Angaben nicht nachvollzogen werden.

So wird in der US 5,626,798 (derselbe Anmelder wie der Anmelder der WO 92/19622) bemängelt, dass Produktlösungen unter Verwendung von Dibutylether als Lösungsmittel zwar in der Tat stabiler sind, allerdings Schwierigkeiten aufgrund der verminderten Lewis-Basizität des verwendeten Lösungsmittels aufträten. So verminderte sich die Reaktionsgeschwindigkeit zwischen Lithiummetall und Chlorbenzol während des letzten Viertels der Halogenidzugabe. Aufgrund dieser Reaktionsverzögerung bildeten sich Verunreinigungen wie Diphenyllithium und Diphenyl durch Nebenreaktionen zwischen Phenyllithium und Chlorbenzol. Dies führte zwangsläufig zu einer Verminderung des Phenyllithiumgehaltes während der Lagerung. Diese Beobachtungen konnten in eigenen Experimenten (siehe Vergleichsbeispiel B) bestätigt werden.

Die US 5,626,798 empfiehlt zur Erhöhung der Reaktionsgeschwindigkeit den Zusatz bestimmter Lewis-Basen der Formel R²AR³(R⁴) oder zyklischer Verbindungen (CR⁵R⁶)_{y}A(R⁴)_{z}, wobei A ausgewählt ist aus Sauerstoff, Stickstoff, Phosphor oder Schwefel; R², R³ und R⁴ sind ausgewählt aus Alkylradikalen mit 1 bis 6 C-Atomen; R⁵ und R⁶ sind unabhängig ausgewählt aus Wasserstoff oder bis zu 6 C-Atomen enthaltenden Alkylradikalen; y ist eine ganze Zahl zwischen 4 und 6; wenn A gleich Sauerstoff oder Schwefel ist, dann ist z gleich Null, und wenn A gleich Stickstoff oder Phosphor ist, dann ist z gleich 1. Dabei beträgt das Molverhältnis zwischen Ether und Arylhalogenid mindestens 1,3 bis 1 und das Molverhältnis zwischen Lewis-Base und Arylhalogenid 0,01 bis 0,50.

Nachteile dieses Verfahrens sind die immer noch unbefriedigenden Ausbeuten von 87,4 bis 91,5 % (siehe die drei in der US 5,626,798 beschriebenen Beispiele), aber vor allem die verminderte Lagerstabilität. Die US 5,626,798 macht diesbezüglich zwar keine Angaben, jedoch wurde in eigenen Vergleichsbeispielen gezeigt, dass sich Lösungen, welche die beanspruchten Lewis-Basen, insbesondere MTBE (Methyl-tert-butylether) enthalten, wesentlich rascher zersetzen als solche ohne die genannten Zusätze (siehe eigene Beispiele, Tabelle 1). Ursächlich verantwortlich ist ein Angriff der Aryllithiumverbindungen auf die Lewis-Basen, vermutlich unter Spaltung der C-O- Bindungen. Es bilden sich auf diese Weise schwarz verfärbte Lösungen mit einem deutlich erhöhten Restbasegehalt. Weiterhin enthalten die gemäß US 5,626,798 hergestellten Produktlösungen immer noch einen relativ hohen Arylhalogenidgehalt. So enthält das als Beispiel 1 beschriebene Produkt einen gegenüber dem Stand der Technik zwar verminderten, aber immer noch sehr hohen Chlorbenzolgehalt von 1 Gew.-% (entspricht 3,3 mol-%). Auch der Diphenylgehalt ist noch unbefriedigend hoch (siehe eigenes Vergleichsbeispiel A, Tabelle 3).

D.Guijarro et al offenbaren in "Arene-Catalysed Lithiation of Fluoroarenes", Tetrahedron, Bd. 56, Nr. 8, Febr. 2000, Seiten 1135-1138 die Lithiierung von Fluorarenen mit einer hohen Katalysatorzugabe von 7 mol-%. D.Ramon et al beschreiben in "New Methodologies based on Arene-Catalysed Lithiation Reactions and their Application to Synthetic Organic Chemistry" European Journal of Organic Chemistry, 2000, Seiten 225-237, eine Lithüerungsreaktion mit ebenfalls einer hohen Katalysatormenge von 5 mol % Naphthalin. A.Guijarro verwendet in "Naphtalene-Catalysed Lithiation of Functionalized Chloroarenes", Tetrahedron, Bd. 49, Nr. 2, 1993, Seiten 469-482, bei der Lithiierung 3 mol-% Naphthalin als Katalysator und einen großen Li-Überschuss von umgerechnet 180 mol-%.

Aufgabe der vorliegenden Erfindung ist es, die Nachteile des Standes der Technik zu vermeiden und ein Verfahren zur Herstellung von Aryllithiumverbindungen aufzuzeigen, das die Verlangsamung der Reaktionsgeschwindigkeit zwischen Arylhalogenid und Lithiummetall vermeidet (insbesondere im letzten Viertel der Arylhalgeniddosierung) und das ein reines Produkt mit einer hohen Ausbeute (z.B. > 90 %) liefert. Unter Produktreinheit wird insbesondere ein reduzierter Gehalt an Kupplungsprodukten (z.B. Diphenyl), Arylhalogeniden und Restbase (Entstehung durch Angriff auf Lewis-Basen mit hoher Lewis-Basizität) verstanden.

Die Aufgabe wird durch ein Verfahren zur Herstellung von Aryllithiumverbindungen gelöst, bei dem metallisches Lithium, welches bevorzugt als Dispersion vorliegt, in einem etherhaltigen Lösungsmittel mit einem Arylhalogenid zur Reaktion gebracht wird und vor oder zu Beginn der Reaktion ein Katalysator zugegeben wird, wobei der Katalysator einen halogenfreien, mehrkernigen Aromaten (Arylkatalysator) enthält oder aus einem solchen besteht.

Es wurde überraschend gefunden, dass halogenfreie, mehrkernige Aromaten die Reaktion beschleunigen und gleichzeitig die Selektivität verbessern, d.h. unter ansonsten vergleichbaren Reaktionsbedingungen wird eine erfindungsgemäß hergestellte Produktlösung signifikant reiner sein als ein nach dem Stand der Technik hergestelltes Produkt. Insbesondere sind die Restgehalte an Arylhalogenid und Wurtz-Nebenprodukten vermindert.

Der Arylkatalysator wird vor Beginn oder zu Beginn der Reaktion zugegeben. "Zu Beginn" wird dabei so definiert, dass die Zugabe des Arylkatalysators abgeschlossen ist, wenn die Hälfte der Gesamtmenge des einzusetzenden Arylhalogenids der Reaktion zudosiert wurde.

Als Arylkatalysator kann ein mehrkerniger, halogenfreier Aromat aus der Gruppe der orthokondensierten Aromaten oder aus der Gruppe der über Einfachbindungen miteinander verbundenen Aromaten eingesetzt werden, wobei der Aromat alkylsubstituiert sein kann. Beispiele derartiger Katalysatoren sind im folgenden angegeben:

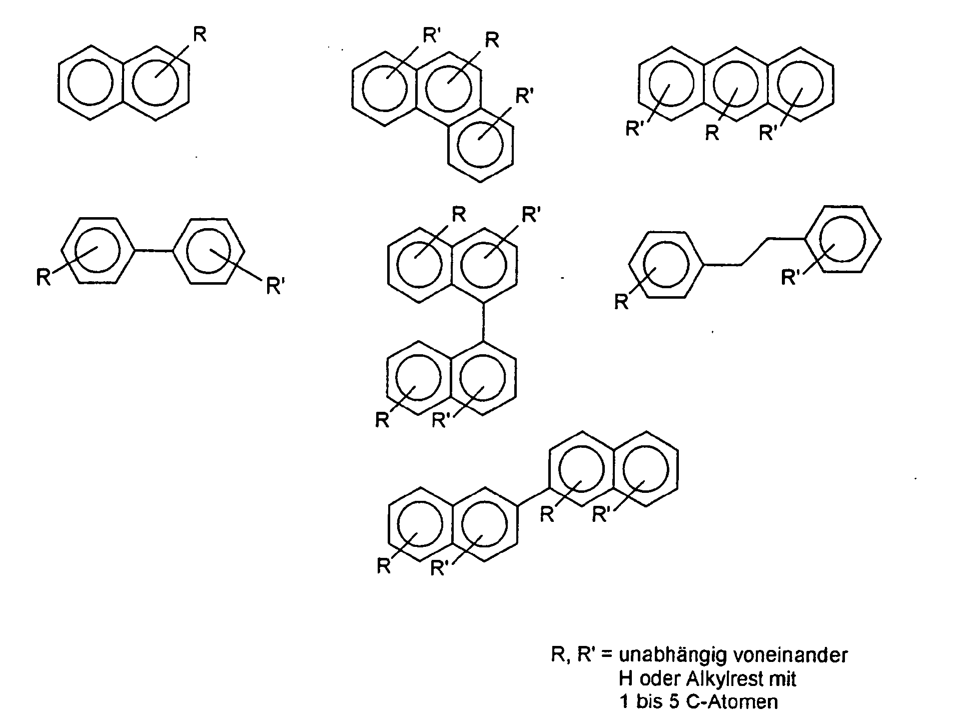

Geeignete Arylkatalysatoren sind insbesondere die bei der Reaktion entstehenden Wurtz-Kupplungsprodukte. In diesem Fall wird der Herstellprozess deutlich optimiert, ohne dass eine fremde Substanz zugemischt wird. In einigen Fällen, insbesondere wenn das jeweilige Kupplungsprodukt nicht kommerziell verfügbar ist, kann es sinnvoll sein, einen anderen Arylkatalysator zu verwenden.

Z.B. können orthokondensierte, polycyclische Aromaten wie Naphthalin, Phenanthren, Anthracen etc. eingesetzt werden, die einfach oder mehrfach alkylsubstituiert sein können. Des weiteren können auch über Einfachbindungen verbundene aromatische Systeme wie Diphenyl, 4,4'-Di-tert-butyldiphenyl, Dinaphthyl etc. eingesetzt werden.

Die optimale Arylkatalysatormenge muss im Einzelfall ausprobiert werden. Sie richtet sich nach der "Aktivität" des Katalysators, d.h. speziell der Bildungsgeschwindigkeit und Stabilität des mit Lithiummetall gebildeten Radikalanions und der Lösungsmittel/Arylhalogenidkombination. So werden z.B. bei der Herstellung von Phenyllithiumlösungen in aliphatischen Ethern R-O-R' mit R, R' = Alkylgruppen mit mindestens 3 C-Atomen vorzugsweise 0,1 bis 0,6 mol-% (bezogen auf die Menge des eingesetzten Arylhalogenids) eines über eine Einfachbindung verbundenen zweikernigen Aromaten, z.B. Diphenyl oder 4,4'-Di-tert-butyl-diphenyl, zugegeben. Im Regelfall liegt die benötigte Katalysatormenge zwischen 0,05 und 2 mol-%, bezogen auf die Gesamtmenge des jeweils eingesetzten Arylhalogenids.

Bevorzugt liegt das metallische Lithium in feinverteilter Form vor, wobei die Teilchengrößen bevorzugt bei < 0,1 mm und besonders bevorzugt bei < 0,05 mm liegen. Bevorzugt hat das Lithiummetall einen Na-Gehalt von 0,5 bis 5 Gew.-%, besonders bevorzugt 1 bis 3 Gew.-%. Bevorzugt wird das Lithium zum Arylhalogenid im Überschuss eingesetzt. Der Überschuss kann bevorzugt 1 bis 40 mol-%, besonders bevorzugt 5 bis 25 mol-% betragen.

Als Lösungsmittel werden Ether, entweder in reiner Form oder im Gemisch mit Kohlenwasserstoffen, eingesetzt. Die Ether können acyclisch oder cyclisch sein. Acyclische Ether R-O-R' mit R und R' unabhängig voneinander C₁ bis C₆ können auch im Gemisch oder zusammen mit cyclischen Ethern (bevorzugt mit 4 bis 8 C-Atomen) eingesetzt werden. Bevorzugte etherische Lösungsmittel sind: Diethylether, Dipropylether, Dibutylether, tert-Butylmethylether (MTBE), tert-Amylmethylether, Tetrahydrofuran, 2-Methyltetrahydrofuran und Tetrahydropyran. Ganz besonders bevorzugt sind Dibutylether und Diethylether.

Das etherische Lösungsmittel kann neben Ethern auch wasserfreie Kohlenwasserstoffe in einer Menge von maximal 50 Gew.-%, bezogen auf die Gesamtmenge Lösungsmittel, enthalten. Geeignete Kohlenwasserstoffe sind Alkane mit 5 bis 8 C-Atomen, z.B. Pentan, Hexan, Heptan, Octan, Cyclohexan oder Methylcyclohexan. Des weiteren können auch flüssige Aromaten mit bis zu 8 C-Atomen, beispielsweise Benzol, Toluol, Ethylbenzol und Xylole verwendet werden. Besonders bevorzugt sind Cyclohexan, Methylcyclohexan und Toluol.

Das erfindungsgemäße Verfahren ist allgemein zur Herstellung lithiierter ein- oder mehrkerniger Aromaten oder Heteroaromaten geeignet. Die jeweiligen Aromaten können auch 1 bis 3 Substituenten tragen. Solche Substituenten können z.B. ausgewählt sein aus folgenden Gruppen: Alkyl (R- mit 1 bis 10 C-Atomen), Phenyl (C₆H₅-), Tolyl (C₇H₈-), Alkoxy (R-O- mit R = Alkylrest mit 1 bis 10 C-Atomen), Dialkylamino (RR'N- mit R und R' unabhängig voneinander = Alkylrest mit 1 bis 10 C-Atomen) und F- (Fluor).

Beispiele für einkernige Aryllithiumverbindungen sind: Phenyllithium, 2-, 3-oder 4-Tolyllithium, Cumyllithium, 4-Dimethylaminophenyllithium, 2-Lithioanisol, 2-, 3- oder 4-Fluorophenyllithium, oder Fluorotolyllithium.

Beispiele für mehrkernige Aryllithiumverbindungen sind: α-Naphthyllithium, β-Naphthyllithium, Anthracenyllithium oder Phenanthrenyllithium.

Beispiele für Heteroaromaten sind 2- und 3-Thienyllithium und 2- und 3-Furanyllithium.

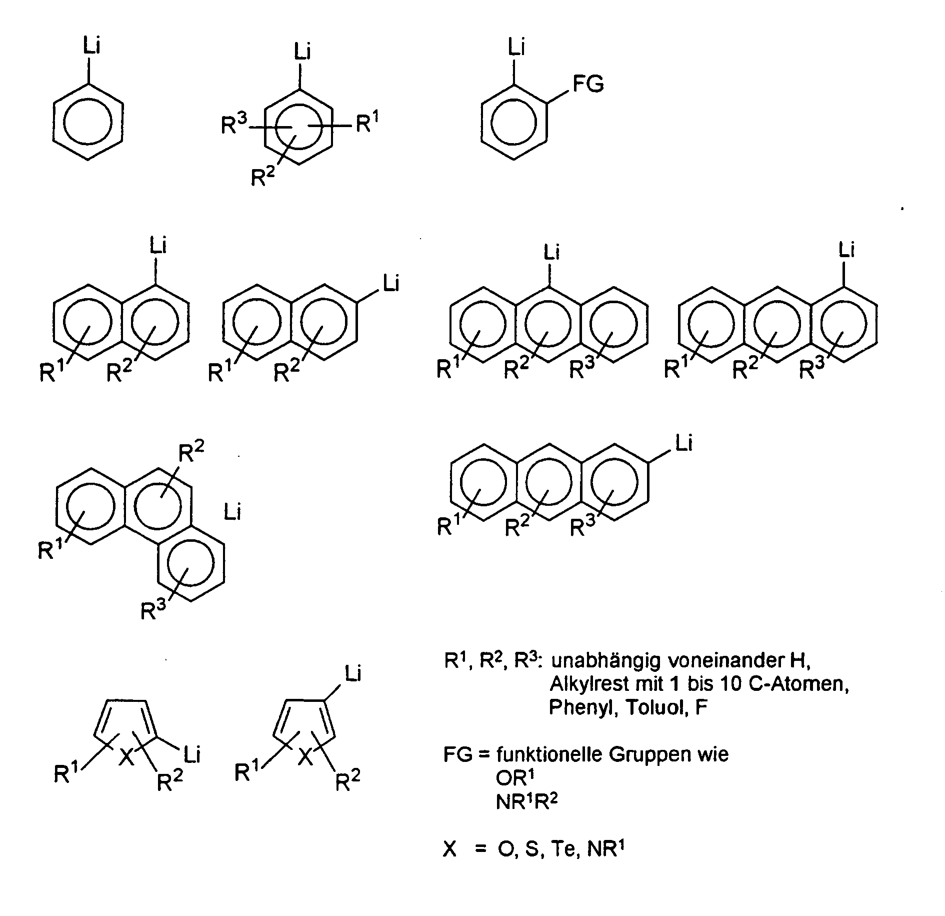

Als Ausgangsverbindungen werden Arylhalogenide Ar-Hal mit Hal = Cl, Br oder I eingesetzt. Besonders bevorzugt sind die Chlorverbindungen (z.B. Chlorbenzol), da diese im allgemeinen am besten verfügbar und billig sind und am wenigsten Wurtz-Nebenprodukte bilden. Die kommerziell verfügbaren Halogenide brauchen in der Regel nicht weiter vorbehandelt zu werden. Sollten sie jedoch mit Wasser oder Halogenwasserstoff (H-Hal) verunreinigt sein, so empfiehlt es sich, einen gängigen Reinigungsschritt, z.B. Filtration über Molsieb, vorzunehmen.

Bevorzugt wird der Lithiummetallsuspension vor der Arylhalogenidzugabe ein Trocknungsmittel wie Lithiumhydrid oder fertige Produktlösung zugegeben. Die Zugabe des Arylhalogenids dauert bevorzugt 5 Minuten bis 5 Stunden, besonders bevorzugt 30 bis 180 Minuten. Die Temperatur der Reaktion (Dosierphase und Nachreaktionsphase) beträgt bevorzugt - 20 bis + 100 °C, besonders bevorzugt 0 bis 60 °C.

Das erfindungsgemäße Verfahren kann z.B. wie folgt durchgeführt werden:

In einem trockenen und inertisierten (d.h. mit Schutzgas wie Argon oder Stickstoff gefüllten) Reaktionsgefäß wird das gewünschte wasserfreie, aprotische Lösungsmittel vorgelegt und feinverteiltes Lithiummetall zugegeben. Das Lithiummetall wird in der Regel als Pulver, d.h. mit Teilchengrößen < 0,1 mm, vorzugsweise < 0,05 mm, eingesetzt. Bei bestimmten Lösungsmittel/Produktkombinationen kann auch gröberes Limetall, z.B. ein Granulat mit einem Durchmesser von ca. 1 bis 3 mm Verwendung finden. Besonders vorteilhaft wird eine Lithiumqualität mit einem relativ hohen Natriumgehalt von 0,5 bis 5 Gew.-%, besonders bevorzugt 1 bis 3 Gew.-%, eingesetzt. Die Lithiummenge entspricht mindestens der stöchiometrischen Menge, d.h. der zweifachen molaren Menge des später zugesetzten Arylhalogenids. Bevorzugt wird das Lithium im Überschuss, d.h. mit 1 bis 40 mol-% Überschuss, besonders bevorzugt mit 5 bis 25 mol-% Überschuss eingesetzt.

Danach wird der halogenfreie, mehrkernige Arylkatalysator zugegeben und bei 0 bis 60 °C 5 bis 100 Minuten gerührt. Insbesondere, wenn die verwendeten Rohstoffe nicht perfekt vorbehandelt sind, d.h. nicht ganz frei von Wasser und anderen protischen Verunreinigungen sind, empfiehlt es sich, die Reaktionsmischung zu aktivieren. Dazu wird eine kleine Menge eines nicht störenden Trocknungsmittels (z.B. Lithiumhydrid in Mengen von ca. 0,1 bis 10 g/kg Lösungsmittel) zugegeben und einige Minuten bis wenige Stunden gerührt. Alternativ kann auch fertige Produktlösung aus einem vorhergehenden Ansatz zugegeben werden (z.B. 0,1 bis 50 ml/kg Lösungsmittel). Das in der Produktlösung enthaltene Ar-Li reagiert mit den störenden Verunreinigungen, so dass eine "inerte Reaktionsmischung" entsteht, die unverzögert mit dem im Folgeschritt zugegebenen Arylhalogenid reagiert. Besonders elegant ist es auch, eine den Arylkatalysator enthaltende Lösung des Ar-Li - Endproduktes zum Starten" eines Ansatzes zuzugeben oder vorzulegen.

Die solchermaßen vorkonditionierte Reaktionsmischung wird nun auf die gewünschte Reaktionstemperatur, das kann je nach Lösungsmittel/Arylhalogenidkombination eine Temperatur zwischen -20 und 100 °C, bevorzugt 0 bis 60 °C sein, gebracht. Im Falle von Ar = Phenyl liegt die besonders bevorzugte Reaktionstemperatur zwischen 20 und 45 °C. Das Arylhalogenid kann in reiner Form oder gelöst, vorzugsweise im selben Lösungsmittel wie es bereits für die Herstellung der Li-Metallsuspension verwendet wurde, eingebracht werden. Im Falle flüssiger Arylhalogenide wird bevorzugt unverdünnt gearbeitet.

Das Halogenid wird über einen Zeitraum von typisch 5 Minuten bis 5 Stunden, vorzugsweise 30 bis 180 Minuten zugegeben. Dabei wird die Metallsuspension kräftig gerührt. Das Einsetzen der Reaktion zwischen Arylhalogenid und Metall kann am Temperaturanstieg (Reaktionswärme) und an der Bildung der unlöslichen Lithiumhalogenidnebenprodukte leicht erkannt werden. Um die gewünschte Temperatur einhalten zu können, wird von außen gegengekühlt.

Nach Zugabeende wird noch mindestens so lange gerührt, wie freiwerdende Reaktionswärme beobachtet wird. Dies ist im allgemeinen 10 Minuten bis 4 Stunden der Fall. Im Labormaßstab wird häufig über Nacht gerührt. Die fertig abreagierte Reaktionssuspension wird dann in bekannter Weise aufgearbeitet, d.h. in der Regel filtriert. Erhalten wird eine Lösung der jeweiligen Aryllithiumverbindung in einem etherhaltigen Lösungsmittel.

Der durch das erfindungsgemäße Verfahren reduzierte Halogenidgehalt in den gewonnenen Aryllithiumverbindungen führt zu lagerstabileren Produkten, da die Wurtz-Nebenreaktion gemäß

Ar-Li + Ar-Hal → Ar-Ar + LiHal

in fertigen Produktlösungen stark reduziert oder ganz unterbunden wird. Die Wurtz-Nebenproduktbildung findet auch während der Produktsynthese statt, wobei das Ausmaß der Nebenreaktion von der Art des Lösungsmittels, des Halogenids, der Temperatur und auch insbesondere von der Beschaffenheit (d.h. Aktivität, spezifische Oberfläche) und Menge (stöchiometrische Menge oder Überschuss) des verwendeten Lithiums abhängt. Unerwarteterweise kann durch die erfindungsgemäße Zugabe der Katalysatoren, insbesondere des unvermeidlich in gewissen Mengen entstehenden Wurtz-Kupplungsproduktes Ar-Ar der am Reaktionsende beobachtete Gesamtgehalt dieses Nebenproduktes stark vermindert werden, d.h. in den erfindungsgemäß hergestellten Produktlösungen ist die Summe aus extern zugegebenem und als Nebenprodukt gebildetem Wurtz-Produkt Ar-Ar niedriger als es bei nach dem Stand der Technik hergestellten Produkten der Fall ist.

Das erfindungsgemäße Verfahren hat weiterhin den Vorteil, dass gute Reaktionsausbeuten bei gleichzeitig kurzen Reaktionszeiten erreicht werden können, ohne dass dabei die nach bisherigem Erkenntisstand erforderlichen Lewis-Basen anwesend sein müssen. Die keine Lewis-Basen enthaltenden Produktlösungen sind im allgemeinen stabiler. Dies zeigt Tabelle 1, in der die Zersetzungsraten von ca. 15 %-igen Phenyllithiumlösungen in reinem Dibutylether und in einem Lösungsmittelgemisch, das neben Dibutylether 7 mol-% Methyl-tert-butylether (MTBE, bezogen auf enthaltenes Phenyllithium) enthält. Dazu wurden die beiden nach dem erfindungsgemäßen Verfahren hergestellten Lösungen in dicht schließenden Glasgefäßen bei 20 und 40 °C acht Wochen lang gelagert:

**Tabelle 1: Zersetzungsraten von Phenyllithium in Dibutylether (in % Aktivbase/Tag)**

| | bei 20 °C | bei 40 °C |
|---|---|---|
| ohne MTBE | -0,019 | -0,079 |
| mit 7 mol-% MTBE | -0,269 | -0,337 |

Die Lösung mit MTBE-Zusatz hatte sich zudem schwarz verfärbt, während das ausschließlich Dibutylether als Lösungsmittel enthaltende Produkt hellbräunlich blieb.

Die Erfindung wird im folgenden anhand von Beispielen näher erläutert.

### Beispiel 1: Herstellung von Phenyllithium in Dibutylether, Katalysator 0,6 mol-% Diphenyl

In einem inertisierten 500 ml Doppelmantelglasreaktor mit Ankerrührer, Rückflusskühler und Innenthermometer wurden 11,5 g Lithiumpulver (1657 mmol, Korngröße < 0,1 mm, Na-Gehalt = 2,3 Gew.-%) sowie 0,17 g (19 mmol) feingemahlenes Lithiumhydrid in 160 g wasserfreiem Dibutylether vorgelegt und unter Rühren auf 32,5 °C erwärmt. Dann wurden 0,67 g (4,3 mmol) Diphenyl (> 99 %, Firma Merck Schuchardt) zugegeben und 10 Minuten gerührt.

Mit einem Dosimaten wurde eine Mischung von 77,5 g (688 mmol) Chlorbenzol und 4,2 g (48 mmol) tert-Butylmethylether (MTBE) über einen Zeitraum von 4 Stunden gleichmäßig zugetropft. Die Reaktion sprang fast sofort an, erkenntlich an einer Erhöhung der Innentemperatur um 2 °C. Durch Gegenkühlung wurde die Innentemperatur im Bereich zwischen 32 und 35 °C gehalten.

Direkt nach Zugabeende wurde eine Probe entnommen und mittels Spritzenfilter klarfiltriert. Durch Gesamtbasetitration wurde ein Umsatz von 86 % festgestellt; per Gaschromatographie (GC) wurde ein Chlorbenzolgehalt von 4 Gew.-% detektiert.

Nach einer zweistündigen Nachreaktionsphase bei ca. 32 °C war keine Reaktionswärme mehr feststellbar. Die Reaktionsmischung wurde auf 20 °C abgekühlt und über eine Glasfilterfritte filtriert und analysiert:

| | |
|---|---|
| Gesamtbase: | 3,009 mmol/g (entspricht 97,4 % Umsatz) |
| Restbase: | 0,25 mmol/g |
| Aktivbase: | 2,759 mmol/g (entspricht 23,2 % Phenyllithium) |

GC-Analyse nach Hydrolyse:

| | |
|---|---|
| Diphenyl: | 0,8 Gew.-% |
| Chlorbenzol: | 0,4 Gew.-% |
| Benzol: | 23,2 Gew.-% |
| MTBE: | 1,8 Gew.-% |

Dibutylether: 72,6 Gew%

Der Diphenylgehalt von 0,8 Gew.-% entspricht einem auf Phenyllithium bezogenen Gehalt von 2,0 mol-%.

### Beispiele 2 bis 9 und Vergleichsbeispiele A bis D: Herstellung von Aryllithiumverbindungen (Ar-Li) in etherischen Lösungsmitteln mit und ohne Katalysator

Weitere Reaktionsbeispiele wurden unter variierten Reaktionsbedingungen in einem Laborkalorimeter durchgeführt. Dieser Versuchsaufbau erlaubt die genaue Verfolgung der freigesetzten Reaktionswärme und damit indirekt die Feststellung der Reaktionsgeschwindigkeit und des sogenannten "thermischen Umsatzgrades". Der thermische Umsetzungsgrad, eine dimensionslose Zahl, ergibt sich durch Division der bis zu einem bestimmten Zeitpunkt freigesetzten Wärme durch die insgesamt (bei vollständiger Umsetzung) freigesetzte Wärme. Er entspricht damit dem jeweiligen Reaktionsfortschritt.

Analog Beispiel 1 wurden die weiteren erfindungsgemäßen Beispiele 2 bis 9 durchgeführt, wobei die einzelnen Parameter der Tabelle 2 zu entnehmen sind. Die dem Stand der Technik entsprechenden Vergleichsbeispiele A bis D wurden unter sonst gleichen Reaktionsbedingungen ohne die Zugabe eines Katalysators durchgeführt. Die einzelnen Parameter sind der Tabelle 2 zu entnehmen. Alle in Tabelle 2 beschriebenen Beispiele wurden wie Beispiel 1 mit einem 20 mol-%-igen Lithiumüberschuss durchgeführt.

**Tabelle 2: Beispiele 2 bis 9, Vergleichsbeispiele A bis D, Herstellung von Aryllithiumverbindungen (Ar-Li) in etherischen Lösungsmitteln**

| Bsp. | Ar-Li¹⁾ | Dosierzeit | Nachreaktionszeit | Rk- temp. | MTBE²⁾ | Lsg.- mittel ³⁾ | Katalysator⁴⁾ | therm. Umsatzgrad, Dosierende | Umsatz Dosierende | Umsatz Filtrat | Ausbeute (inkl. Waschung) |
|---|---|---|---|---|---|---|---|---|---|---|---|
| | Ar = | (hrs) | (hrs) | (°C) | (mol%) | | (mol%) | (%) | (%) | (%) | (% d. Th.) |
| 2 | Ph | 1 | 3 | 32-38 | 7 | Bu₂O | 0,6 DP | 82 | n.b. | 97,2 | 95,1 |
| A | Ph | 1 | 4 | 32-38 | 7 | Bu₂O | ./. | 65 | n.b. | 89,6 | 85,0 |
| 3 | Ph | 1 | 2 | 32-38 | ./. | Bu₂O | 0,3 DP | 83 | 72,9 | 97,0 | 94,0 |
| B | Ph | 1 | 4 | 32-38 | ./. | Bu₂O | ./. | 73 | 63,0 | 91,3 | 90,8 |
| 4 | Ph | 1 | 3,5 | 32-38 | ./. | Bu₂O | 0,1 N | 72 | 65,9 | 95,6 | 92,5 |
| 5 | Ph | 1 | 4 | 32-38 | ./. | Bu₂O | 0,3 TBDP | 69,7 | 61,5 | 93,4 | 92,3 |
| | | | | | | | | | | | |
| 6 | Ph | 2 | 3 | 20-23 | ./. | Et₂O/ CH | 0,1 DP | 85,6 | 76,8 | 98,0 | 95,4 |
| | | | | | | | | | | | |
| 7 | Ph | 2 | 3 | 20-23 | ./. | Et₂O/ CH | 0,3 DP | 88 | 80,7 | 93,6 | 88 |
| | | | | | | | | | | | |
| 8 | Ph | 2 | 3 | 20-23 | ./. | Et₂O/ CH | 0,5 DP | 89 | 80 | 97,3 | 92,9 |
| | | | | | | | | | | | |
| C | Ph | 2 | 4 | 20-23 | ./. | Et₂O/ CH | ./. | 82,6 | 57,9 | 84,1 | 79,5 |
| | | | | | | | | | | | |
| 9 | p-Tol | 2 | 2,5 | 20-23 | ./. | Bu₂O | 0,3 DP | 84,4 | 78,6 | 95,2 | 93,2 |
| D | p-Tol | 2 | 2,5 | 20-23 | ./. | Bu₂O | ./. | 86,9 | 75,0 | 94,8 | 89,6 |

| | | | | | | | | | | | |
|---|---|---|---|---|---|---|---|---|---|---|---|
| ¹⁾ Ph = Phenyl n.b. = nicht bestimmt p-Tol = p-Tolyl | | | | | | | | | | | |
| ²⁾ MTBE = tert-Butylmethylether | | | | | | | | | | | |
| ³⁾ Bu₂O = Dibutylether Et₂O/CH = Gemisch 35 % Diethylether, 65 % Cyclohexan | | | | | | | | | | | |
| ⁴⁾ DP = Diphenyl N = Naphthalin TBDP = Di-tert-butyldiphenyl | | | | | | | | | | | |

Den Beispielen 2 bis 9 und den entsprechenden Vergleichsbeispielen A bis D ist der reaktionsbeschleunigende und ausbeuteerhöhende Effekt der erfindungsgemäßen Zugabe der Arylkatalysatoren zu entnehmen.

Beispiel 2 und Vergleichsbeispiel A beschreiben die Synthese von Phenyllithium in einem Gemisch von Dibutylether mit 7 mol-% MTBE bei einer Reaktionstemperatur zwischen 32 und 38 °C. Zum Ende der Dosierzeit von jeweils 1 Stunde sind beim erfindungsgemäßen Beispiel bereits 82 % der gesamten Reaktionswärme freigesetzt, während ohne Katalysator erst 65 % der Wärme entwickelt wurde. Die Ausbeute beim Beispiel 2 liegt bei ca. 99 %, das sind fast 10 % mehr als beim Vergleichsbeispiel A.

Ähnliche Effekte treten auch bei halber Katalyatorkonzentration und in Abwesenheit der Lewis-Base MTBE auf (Beispiel 3 und Vergleichsbeispiel B).

Beispiel 4 demonstriert, dass auch Naphthalin, und zwar schon in einer sehr geringen Konzentration von 0,1 mol-%, eine Umsatz- und Ausbeutesteigerung von ca. 3 % gegenüber dem Vergleichsbeispiel B bewirkt.

Die erfindungsgemäße Zugabe des Katalysators Di-tert-butyldiphenyl führt zwar nicht zu einer Reaktionsbeschleunigung, aber zu einer Umsatz- und Ausbeuteerhöhung (Beispiel 5 gegenüber Vergleichsbeispiel B).

Die Beispiele 6 bis 8 und das Vergleichsbeispiel C zeigen, dass in einem Lösungsmittelgemisch, bestehend aus 35 Gewichtsteilen Diethylether und 65 % Cyclohexan, die erfindungsgemäße Zugabe des Arylkatalysators Diphenyl ebenfalls positiv wirkt: Ausbeuten und Umsätze sind gegenüber dem Vergleichsbeispiel C signifikant verbessert. Besonders auffällig ist auch die wesentlich höhere Reaktionsgeschwindigkeit, wie sie aus den unterschiedlichen Umsätzen zum Zeitpunkt des Dosierendes abgeleitet werden kann.

Das Beispiel 9 und das Vergleichsbeispiel D zeigen die Herstellung von p-Tolyllithium in Dibutylether. Bei der relativ langen Dosierzeit von zwei Stunden ist zwar beim Beispiel 9 der thermische Umsatz bei Dosierende etwas kleiner als beim Vergleichsbeispiel D, jedoch sind die Umsätze und die Produktausbeute beim erfindungsgemäßen Beispiel signifikant höher.

Bei den in Tabelle 2 aufgeführten Beispielen und Vergleichsbeispielen wurden Proben der klarfiltrierten Endprodukte entnommen und gaschromatografisch auf ihre Zusammensetzung analysiert. Die Ergebnisse sind in Tabelle 3 dargestellt:

**Tabelle 3: Zusammensetzung der klarfiltrierten Produkte aus Tabelle 2**

| Beispiel | Chlorbenzol (Gew.-%) | Diphenyl (Gew.-%) | Phenyllithium (Gew.-%) | Diphenyl (mol%)* |
|---|---|---|---|---|
| 2 | 0,24 | 0,93 | 25,1 | 2,0 |
| A | 1,6 | 2,9 | 21,2 | 6,9 |
| 3 | 0,4 | 0,8 | 24,0 | 2,2 |
| B | 1,3 | 1,1 | 23,4 | 3,1 |
| 6 | 0,6 | 0,9 | 23,9 | 2,4 |
| 7 | 0,2 | 0,5 | 22,8 | 1,4 |
| 8 | 0,9 | 0,8 | 23,7 | 2,2 |
| C | 4,5 | 0,9 | 20,9 | 2,8 |

| | | | | |
|---|---|---|---|---|
| *bezogen auf Phenyllithium | | | | |

Aus Tabelle 3 ist ersichtlich, dass die nach dem erfindungsgemäßen Verfahren hergestellten Produkte eine größere Reinheit als die nach dem Stand der Technik hergestellten Produkte aufweisen und in höherer Ausbeute entstehen. So ist beispielsweise beim Vergleich zwischen Beispiel 2 und Vergleichsbeispiel A ein Rückgang des Chlorbenzolgehaltes um 85 und des Diphenylgehaltes um 70 % zu konstatieren.

## Patentansprüche

1. Verfahren zur Herstellung von Aryllithiumverbindungen durch Reaktion von metallischem Lithium in einem etherhaltigen Lösungsmittel mit einem Arylhalogenid Ar-Hal, mit Hal = Cl, Br oder I, **dadurch gekennzeichnet, dass** vor oder zu Beginn der Reaktion ein Katalysator zugegeben wird, wobei der Katalysator einen halogenfreien, mehrkernigen Aromaten (Arylkatalysator) enthält oder aus einem solchen besteht, wobei der Arylkatalysator in einer Menge von 0,05 bis 2 mol-% (bezogen auf die Menge des insgesamt eingesetzten Arylhalogenids) zugegeben wird, und wobei das Lithium zum Arylhalogenid im Überschuss von 1 bis 40 mol-% eingesetzt wird und.

2. Verfahren nach Anspruch 1, **dadurch gekennzeichnet, dass** als Arylkatalysator ein mehrkerniger, halogenfreier Aromat aus der Gruppe der orthokondensierten Aromaten oder aus der Gruppe der über Einfachbindungen miteinander verbundenen Aromaten eingesetzt wird, wobei der Aromat alkylsubstituiert sein kann oder eine funktionelle Gruppe enthalten kann.

3. Verfahren nach Anspruch 2, **dadurch gekennzeichnet, dass** als Arylkatalysator Naphthalin, Phenanthren, Anthracen, Diphenyl oder 4,4'-Di-tert-butyldiphenyl eingesetzt wird.

4. Verfahren nach einem der Ansprüche 1 bis 3, **dadurch gekennzeichnet, dass** das metallische Lithium in feinverteilter Form mit Teilchengrößen von < 0,1 mm vorliegt und im Lösungsmittel dispergiert ist.

5. Verfahren nach einem der Ansprüche 1 bis 4, **dadurch gekennzeichnet, dass** das Lithiummetall einen Na-Gehalt von 0,5 bis 5 Gew.-%, aufweist.

6. Verfahren nach einem der Ansprüche 1 bis 5, **dadurch gekennzeichnet, dass** das Lithium zum Arylhalogenid im Überschuss von 5 bis 25 mol-% eingesetzt wird.

7. Verfahren nach einem der Ansprüche 1 bis 6, **dadurch gekennzeichnet, dass** als etherhaltiges Lösungsmittel acyclische Ether R-O-R' mit R und R' unabhängig voneinander mit jeweils 1 bis 6 C-Atomen oder cyclische Ether mit 4 bis 8 C-Atomen einzeln oder als Gemisch eingesetzt werden.

8. Verfahren nach einem der Ansprüche 1 bis 7, **dadurch gekennzeichnet, dass** als etherhaltiges Lösungsmittel Diethylether, Dipropylether, Dibutylether, tert-Butylmethylether, tert-Amylmethylether, Tetrahydrofuran, 2-Methyltetrahydrofuran oder Tetrahydropyran einzeln oder im Gemisch eingesetzt wird.

9. Verfahren nach einem der Ansprüche 1 bis 8, **dadurch gekennzeichnet, dass** das etherhaltige Lösungsmittel zusätzlich wasserfreie Kohlenwasserstoffe in einer Menge von maximal 50 Gew.-%, bezogen auf die Gesamtmenge Lösungsmittel, enthält.

10. Verfahren nach einem der Ansprüche 1 bis 9, **dadurch gekennzeichnet, dass** der Lithiummetallsuspension vor der Arylhalogenidzugabe ein Trocknungsmittel zugegeben wird.

11. Verfahren nach einem der Ansprüche 1 bis 10, **dadurch gekennzeichnet, dass** die Temperatur der Reaktion (Dosierphase und Nachreaktionsphase) - 20 bis + 100 °C beträgt.

12. Verfahren nach Anspruch 11, **dadurch gekennzeichnet, dass** die Temperatur der Reaktion (Dosierphase und Nachreaktionsphase) 0 bis 60 °C beträgt.

13. Verfahren nach einem der Ansprüche 1 bis 12, **dadurch gekennzeichnet, dass** als Arylhalogenid ein Halogenbenzol und als etherhaltiges Lösungsmittel Dibutylether eingesetzt wird und als Produkt Phenyllithium erhalten wird.

14. Verfahren nach Anspruch 13, **dadurch gekennzeichnet, dass** das etherhaltige Lösungsmittel neben Dibutylether einen weiteren Ether enthält.

15. Verfahren nach einem der Ansprüche 1 bis 12, **dadurch gekennzeichnet, dass** als Arylhalogenid ein Halogenbenzol und als etherhaltiges Lösungsmittel Diethylether im Gemisch mit Cyclohexan oder Methylcyclohexan eingesetzt wird und als Produkt Phenyllithium erhalten wird.

## Claims

1. A process for the preparation of aryllithium compounds by the reaction of metallic lithium in an ether-containing solvent with an aryl halide Ar-Hal where Hal = Cl, Br or I, **characterised in that**, prior to or at the beginning of the reaction, a catalyst is added, the catalyst containing a halogen-free, polynuclear aromatic (aryl catalyst) or consisting of such a compound, wherein the aryl catalyst is added in an amount of 0.05 to 2 mole % (referred to the amount of the aryl halide used overall), and wherein the lithium is used in an excess of 1 to 40 mole % with respect to the aryl halide.

2. A process according to claim 1, **characterised in that** the aryl catalyst used is a polynuclear, halogen-free aromatic selected from the group of ortho-condensed aromatics or from the group of aromatics bonded to one another by single bonds, wherein the aromatic may be alkyl-substituted or may contain a functional group.

3. A process according to claim 2, **characterised in that** naphthalene, phenanthrene, anthracene, diphenyl or 4,4'-di-tert.butyldiphenyl is used as the aryl catalyst.

4. A process according to one of claims 1 to 3, **characterised in that** the metallic lithium is present in finely-divided form, having particle sizes of < 0.1 mm, and is dispersed in the solvent.

5. A process according to one of claims 1 to 4, **characterised in that** the lithium metal has an Na content of 0.5 to 5 wt.%.

6. A process according to one of claims 1 to 5, **characterised in that** the lithium is used in an excess of 5 to 25 mole % with respect to the aryl halide.

7. A process according to one of claims 1 to 6, **characterised in that** acyclic ethers R-O-R' where R and R' independently of one another each have 1 to 6 C atoms, or cyclic ethers having 4 to 8 C atoms, individually or in a mixture, are used as the ether-containing solvent.

8. A process according to one of claims 1 to 7, **characterised in that** diethyl ether, dipropyl ether, dibutyl ether, tert.butyl methyl ether, tert.amyl methyl ether, tetrahydrofuran, 2-methyltetrahydrofuran or tetrahydropyran, individually or in a mixture, is used as the ether-containing solvent.

9. A process according to one of claims 1 to 8, **characterised in that** the ether-containing solvent contains, in addition, anhydrous hydrocarbons in a quantity of 50 wt.% at most, based on the total quantity of solvent.

10. A process according to one of claims 1 to 9, **characterised in that** a drying agent is added to the lithium metal suspension prior to the addition of the aryl halide.

11. A process according to one of claims 1 to 10, **characterised in that** the temperature of the reaction (addition stage and post-reaction stage) is -20°C to +100°C.

12. A process according to claim 11, **characterised in that** the temperature of the reaction (addition stage and post-reaction stage) is 0°C to 60°C.

13. A process according to one of claims 1 to 12, **characterised in that** the aryl halide used is a halobenzene and the ether-containing solvent used is dibutyl ether and that phenyllithium is obtained as product.

14. A process according to claim 13, **characterised in that** the ether-containing solvent contains another ether in addition to dibutyl ether.

15. A process according to one of claims 1 to 12, **characterised in that** the aryl halide used is a halobenzene and the ether-containing solvent used is dibutyl ether in a mixture with cyclohexane or methylcyclohexane and that phenyllithium is obtained as product.

## Revendications

1. Procédé de préparation de composés aryllithium, par la réaction de lithium métallique, dans un solvant contenant un éther, avec un halogénure d'aryle de formule Ar-Hal, où Hal représente Cl, Br ou I, **caractérisé en ce que**, avant le début ou au début de la réaction, on ajoute un catalyseur qui contient un composé aromatique polycyclique non halogéné ou qui est constitué par un tel composé (catalyseur arylique), ce catalyseur arylique est ajouté en une proportion de 0,05 à 2 % en moles par rapport à la quantité totale de l'halogénure d'aryle utilisé, et le lithium est utilisé en excès de 1 à 40 % en moles par rapport à l'halogénure d'aryle.

2. Procédé selon la revendication 1, **caractérisé en ce que** l'on utilise comme catalyseur arylique un composé aromatique polycyclique non halogéné, choisi parmi les composés aromatiques à noyaux condensés en ortho et les composés aromatiques liés les uns aux autres par l'intermédiaire de liaisons simples, ce composé aromatique pouvant porter un substituant alkyle ou un groupe fonctionnel.

3. Procédé selon la revendication 2, **caractérisé en ce que** l'on utilise comme catalyseur arylique du naphtalène, du phénanthrène, de l'anthracène, du biphényle ou du 4,4'-di-tert.-butylbiphényle.

4. Procédé selon l'une des revendications 1 à 3, **caractérisé en ce que** le lithium métallique se présente sous une forme finement divisée, avec une taille de particule inférieure à 0,1 mm, et est dispersé dans le solvant.

5. Procédé selon l'une des revendications 1 à 4, **caractérisé en ce que** le métal lithium présente une teneur en sodium de 0,5 à 5 % en poids.

6. Procédé selon l'une des revendications 1 à 5, **caractérisé en ce que** l'on utilise le lithium en excès de 5 à 25 % en moles par rapport à l'halogénure d'aryle.

7. Procédé selon l'une des revendications 1 à 6, **caractérisé en ce que** l'on utilise, comme solvant contenant un éther, un solvant choisi parmi les éthers acycliques de formule R-O-R', où R et R' comportent chacun indépendamment 1 à 6 atomes de carbone, et les éthers cycliques comportant 4 à 8 atomes de carbone, individuellement ou sous forme de mélange.

8. Procédé selon l'une des revendications 1 à 7, **caractérisé en ce que** l'on utilise, comme solvant contenant un éther, de l'éther diéthylique, de l'éther dipropylique, de l'éther dibutylique, de l'éther tert.-butylméthylique, de l'éther tert.-amylméthylique, du tétrahydrofuranne, du 2-méthyltétrahydrofuranne ou du tétrahydropyranne, individuellement ou sous forme de mélange.

9. Procédé selon l'une des revendications 1 à 8, **caractérisé en ce que** le solvant contenant un éther renferme en outre des hydrocarbures anhydres en une proportion atteignant au plus 50 % en poids, par rapport à la quantité totale de solvant.

10. Procédé selon l'une des revendications 1 à 9, **caractérisé en ce que** l'on ajoute un agent déshydratant à la suspension de métal lithium, avant d'introduire l'halogénure d'àryle.

11. Procédé selon l'une des revendications 1 à 10, **caractérisé en ce que** la température de la réaction (phase d'introduction dosée et phase réactionnelle ultérieure) vaut de -20°C à +100°C.

12. Procédé selon la revendication 11, **caractérisé en ce que** la température de la réaction (phase d'introduction dosée et phase réactionnelle ultérieure) vaut de 0°C à 60°C.

13. Procédé selon l'une des revendications 1 à 12, **caractérisé en ce que** l'on utilise un halogénobenzène comme halogénure d'aryle et de l'éther dibutylique comme solvant contenant un éther, et l'on obtient du phényllithium comme produit.

14. Procédé selon la revendication 13, **caractérisé en ce que** le solvant contenant un éther contient un autre éther, en plus de l'éther dibutylique.

15. Procédé selon l'une des revendications 1 à 12, **caractérisé en ce que** l'on utilise un halogénobenzène comme halogénure d'aryle et de l'éther diéthylique mélangé à du cyclohexane ou du méthylcyclohexane comme solvant contenant un éther, et l'on obtient du phényllithium comme produit.
